# EUROPÄISCHE PATENTANMELDUNG

(11) **EP 1 410 939 A1**
(43) Veröffentlichungstag der Anmeldung: **21.04.2004**
(21) Anmeldenummer: 02102460.9
(22) Anmeldetag: 17.10.2002
(51) Int. Cl.: B60K 37/06

(54) **Mehrfachschalter**

(71) Anmelder: Ford Global Technologies, Inc., A subsidiary of Ford Motor Company, Dearborn, Michigan 48126 (US)
(72) Erfinder: Simon, Walter, 51107 Köln (DE)
(74) Vertreter: Drömer, Hans-Carsten, Dr.-Ing.

(57) **Zusammenfassung**

Die Erfindung betrifft einen Mehrfachschalter (15), insbesondere für die Steuerung von Einrichtungen in einem Kraftfahrzeug, mit wenigstens zwei elektrischen Schaltern (12), wobei jedem Schalter (12) ein Bedienfläche zugeordnet ist, die haptische Merkmale aufweist. Sie ist dadurch gekennzeichnet, daß für alle Schalter (12) ein gemeinsames Bedienelement (16) vorgesehen ist, wobei das Bedienelement (16) auf seiner Bedienfläche (4) die haptischen Merkmale (7, 23, 24, 25, 28) aufweist. Vorzugsweise weisen die haptischen Merkmale (24, 25) an der Stelle des Bedienelements (2, 16), wo bei einer Schaltbetätigung der einer Einrichtung zugeordnete Schalter (12) betätigt wird, schematisch die Form der zu schaltenden Einrichtung auf. Vorteil ist eine bessere Ertastbarkeit der Schaltfunktion für den Bediener.

## Beschreibung

Die Erfindung bezieht sich auf einen Mehrfachschalter, insbesondere für die Steuerung von Einrichtungen in einem Kraftfahrzeug, gemäß dem Oberbegriff des Anspruches 1.

Derartige Mehrfachschalter sind vor allem in Kraftfahrzeugen als Bedienungs- bzw. Betätigungseinrichtungen zur Steuerung verschiedenster Einrichtungen vorgesehen, wenn verwandte Steuerungsfunktionen durch räumlich zusammengefaßte Schaltergruppen nach ergonomischen und auch gestalterischen Gesichtspunkten z. B. auf der Armaturentafel angeordnet werden. Unter Einrichtungen sind hier alle Einrichtungen und/oder Aggregate eines Kraftfahrzeuges zu verstehen, die mittels Schaltbetätigung gesteuert werden, wie z. B. Beleuchtung, Fensterheber, Heizung oder Lüftung.

Aus der DE 195 40 553 ist ein Bediengerät für die Steuerung von Einrichtungen in einem Kraftfahrzeug bekannt, daß mehrere nebeneinanderliegende Schalterpaare aufweist, die jeweils zusammengehörende Funktionen ausführen, z. B. ein Schalterpaar für die Temperaturregelung mit einer Plus-Taste und einer Minus-Taste, oder einen Schalterpaar für die Betätigung von Front- und Heckscheibenheizung. Zur besseren Unterscheidung der Schalter weisen die Bedienflächen der Bedienelemente haptische Merkmale auf, mittels derer die zugehörige Schaltfunktion des damit verbundenen Schalters ertastet werden kann. Die Ertastbarkeit gestaltet sich jedoch dann schwierig, wenn zwei nebeneinanderliegende Schalter sehr ähnliche haptische Merkmale aufweisen. Hier kann es leicht zu einer Verwechslung kommen, so daß trotz vorhandener haptischer Merkmale der Bediener auf die Schalter schauen muß, was z. B. für den Fahrer eines Kraftfahrzeuges während der Fahrt eine unerwünschte Ablenkung vom Verkehrsgeschehen bedeutet.

Aufgabe der vorliegenden Erfindung ist es, einen Mehrfachschalter zu schaffen, womit der Bediener verwechslungssicher die Schaltfunktionen der zum Mehrfachschalter gehörenden Schalter erkennen kann.

Gelöst wird diese Aufgabe mit den Merkmalen des Anspruches 1. Indem für alle Schalter ein gemeinsames Bedienelement vorgesehen ist, wobei das Bedienelement auf seiner Bedienfläche die haptischen Merkmale aufweist, erkennt der Bediener sehr einfach, wo sich sein Finger auf dem Bedienelement befindet bzw. welchen Schalter er bei der jeweiligen Fingerposition betätigen würde, da jeder Schalter ein eigenes haptisches Merkmal aufweist und der Bediener dadurch in der Lage ist, seine Lage auf dem Bedienelement über das ertastete haptische Merkmal mit der zu schaltenden Funktion des Schalters in Verbindung zu bringen und dadurch die Verwechslungsgefahr der Schalter verringert wird. Dabei kann der Mehrfachschalter zwei oder auch mehr Schalter aufweisen, z. B. drei Schalter sind in Form eines Dreiecks angeordnet mit einem dreieckigen Bedienelement, oder vier Schalter sind im Viereck angeordnet mit einem viereckigen Bedienelement. Dabei ist die Form des Bedienelementes nicht vorgegeben, es kann jede Form annehmen, die es erlaubt, die Schalter zu betätigen.

Vorteilhaft weisen die haptischen Merkmale an der Stelle des Bedienelements, wo bei einer Schaltbetätigung der dem Aggregat zugeordnete Schalter geschaltet wird, schematisch die Form der zu schaltenden Einrichtungen auf. Damit wird die Erkennbarkeit für den Bediener gesteigert, indem er die Funktion bzw. Einrichtung selbst ertastet und mit dem Schalter bzw. dessen Schaltfunktion verbindet.

Dabei kann zumindest ein Teil der haptischen Merkmale ein schematisches Kraftfahrzeug darstellen, z. B. in der Seitenansicht, in der Aufsicht oder in der Frontansicht. Dies bedeutet, der Bediener erkennt, wenn er z. B. die Seitenkontur des Fahrzeuges abtastet, ob er sich im Front- oder im Heckbereich des haptischen Merkmals befindet. Entsprechend kann er, da ihm, dem Bediener, die Funktion des Mehrfachschalters bekannt ist, erkennen, ob er eine Funktion im Heckbereich oder im Frontbereich des Fahrzeuges schalten würde. Das Gleiche gilt natürlich entsprechend für die haptischen Merkmale in den anderen Ansichten des Fahrzeuges, z. B. kann er bei der Rückansicht erkennen, ob er oben oder unten im Fahrzeug oder rechts oder links im Fahrzeug etwas schalten würde.

In einer bevorzugten Ausführung ist der Mehrfachschalter ein Bedienschalter für die Heizung der Frontscheibe und der Heckscheibe eines Kraftfahrzeuges. Dabei können zumindest teilweise die haptischen Merkmale die beheizbare Frontscheibe und die beheizbare Heckscheibe darstellen. Insbesondere das Erkennen der Front- bzw. Heckscheibenheizung-Schalters wird so wesentlich vereinfacht, da das haptische Merkmal einer Scheibe alleine es dem Bediener kaum ermöglicht, zwischen Heck- und Frontscheibe zu unterscheiden. Durch die Anordnung der haptischen Merkmale auf einem Bedienelement kann jedoch sofort erkannt werden, ob es sich um die Front- oder die Heckscheibe handelt, abhängig von der Lage des Fingers des Bedieners auf dem Bedienelement und ggf. in Verbindung mit der schematischen Fahrzeugkontur.

Unabhängig von der Gestaltung des Bedienelementes kann der Mehrfachschalter in bekannter Weise für die Betätigung von Schaltern ausgeführt sein, z. B. als Kippschalter. Das Bedienelement kann auch so gestaltet sein, daß wahlweise ein Schalter oder mehrere Schalter gleichzeitig geschaltet werden können. Z. B. können bei der Ausführung mit drei Schaltern drei haptische Merkmal an Positionen vorgesehen sein, wo jeweils nur ein Schalter geschaltet wird, dann können drei haptische Merkmale vorgesehen sein, wo jeweils zwei Schalter gleichzeitig geschaltet werden, und es kann ein zentrales haptisches Merkmal vorgesehen sein, wo alle drei Schalter gleichzeitig geschaltet werden. Entsprechendes gilt natürlich für Ausführungen des Mehrfachschalters mit zwei Schaltern, mit vier oder mit noch mehr Schaltern.

Vorteilhafterweise besteht das Bedienelement zumindest teilweise, vorzugsweise im Bereich haptischer Merkmale, aus einem lichtdurchlässigem Material. Dadurch kann das Bedienelement von hinten, d. h. der dem Bediener abgewandten Seite, beleuchtet werden, was bei ungünstigen Lichtverhältnissen dem Benutzer ermöglicht, das Bedienelement auch visuell zu erkennen.

Weitere vorteilhafte Ausgestaltungen der Erfindungen sind den Zeichnungen zu entnehmen. Es zeigen:
- Fig. 1: die Aufsicht auf einen erfindungsgemäßen Mehrfachschalter;
- Fig. 2: den Schnitt durch den Schalter aus Fig. 1 entlang der Linie A-A;
- Fig. 3: die Aufsicht auf einen weiteren erfindungsgemäßen Mehrfachschalter;
- Fig. 4: den Schnitt durch den Schalter aus Fig. 3 entlang der Linie B-B; und
- Fig. 5: den Schnitt durch einen Mehrfachschalter mit Kippbetätigung.

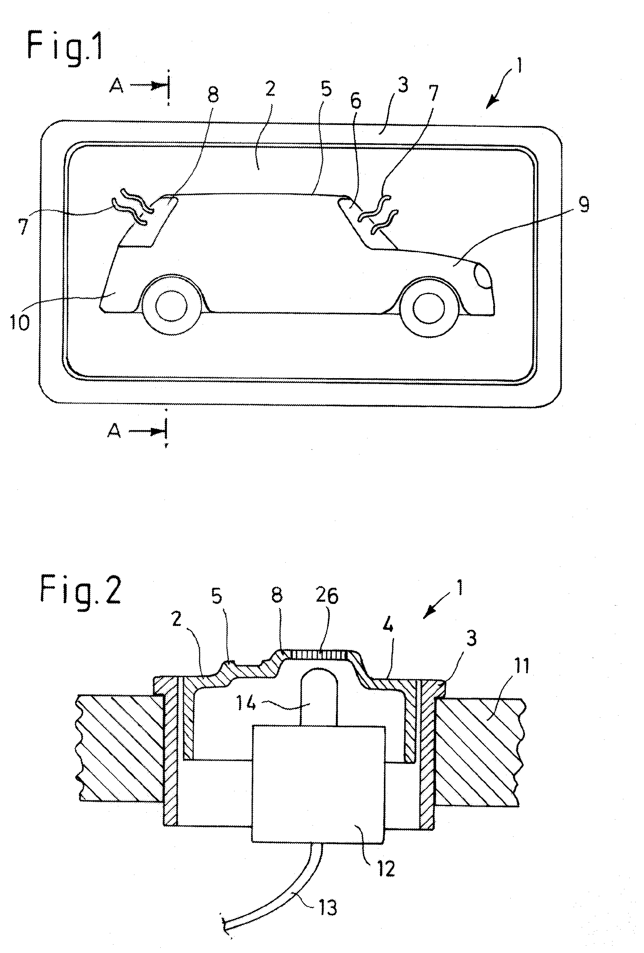

In Fig. 1 und Fig. 2 wird ein erfindungsgemäßer Mehrfachschalter 1 dargestellt, wobei Fig.1 die Aufsicht und Fig. 2 den Schnitt entlang der Linie A-A aus Fig. 1 zeigt. Die Außenkontur des Mehrfachschalter 1 wird im wesentlichen von einem Bedienelement 2 und einem Schaltergehäuse 3 gebildet. Auf der Bedienfläche 4 des Bedienelementes 2 sind haptischen Merkmale angeordnet, und zwar eine schematische Seitenansicht 5 eines Kraftfahrzeuges, eine Frontscheibe 6 mit Heizungssymbol 7 und eine Heckscheibe 8, ebenfalls mit Heizungssymbol 7. Die Seitenansicht 5 erhebt sich über die Bedienfläche 4, damit ist die Kontur des Kraftfahrzeuges gut zu ertasten, insbesondere der Frontbereich 9 und der Heckbereich 10 des Fahrzeuges.

Die haptischen Merkmale Frontscheibe 6 und Heckscheibe 8 erheben sich nocheinmal über die Kontur der Seitenansicht 5, und können damit ebenfalls vom Bediener ertastet werden. Aufgrund der automatischen Zuordnung der ertasteten Frontscheibe 6 zum Frontbereich 9 erkennt der Bediener sofort, daß das ertastete Merkmal die Frontscheibe 6 sein muß, auch wenn sich die haptischen Merkmale Frontscheibe 6 und Heckscheibe 8 selber nicht so groß unterscheiden. Zur weiteren Kenntlichmachung erheben sich die haptischen Merkmale Heizungssymbole 7 ebenfalls über die Kontur der Bedienfläche 4. Sie geben dem Bediener einen zusätzlichen Hinweis, welche Funktionen der Mehrfachschalter 1 schaltet.

In Fig. 2 ist der Mehrfachschalter 1 in Einbaulage in einem Armaturenbrett 11, das nur ausschnittsweise dargestellt ist, gezeigt. Hinter bzw. unterhalb der haptischen Merkmale Frontscheibe 6 und Heckscheibe 8 ist jeweils ein Schalter 12 angeordnet, der mit dem Schaltergehäuse 3 fest verbunden ist, und der über ein Anschlußkabel 13 angeschlossen ist. Der Schalter 12 weist eine Drucktaste 14 auf, die in den Schalter 12 gedrückt werden kann und damit die Schaltung des Schalters 12 auslöst. Die Drucktaste 14 selbst wird gedrückt, indem der Bediener im Bereich des haptischen Merkmals Heckscheibe 8 das Bedienelement 2 eindrückt, welches, da es beweglich im Schaltergehäuse 3 angeordnet ist, in das Schaltergehäuse geschoben wird und damit die Drucktaste 14 betätigt.

Im Bereich des haptischen Merkmals Heckscheibe 8 besteht das Bedienelement 2 aus einem lichtdurchlässigem Material 26. Dadurch wird erreicht, wenn der Mehrfachschalter 1 mittels einer hier nicht dargestellten Lichtquelle von hinten bzw. von innen beleuchtet wird, daß die Heckscheibe 8 auch visuell vom Bediener erkannt wird, vor allem bei Dunkelheit oder sonstigen ungünstigen Lichtverhältnissen im Fahrzeug.

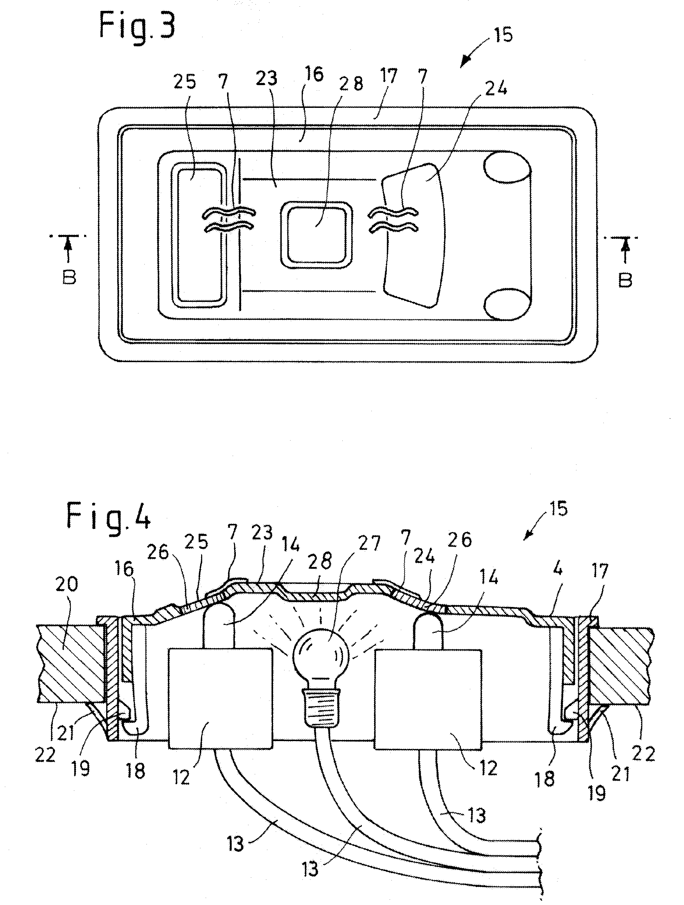

Der in Figur 3 und 4 dargestellte Mehrfachschalter 15 entspricht weitgehend dem Mehrfachschalter 1. Ein Bedienelement 16 ist in einem Schaltergehäuse 17 beweglich angeordnet, wobei das Bedienelement 16 im Schaltergehäuse 17 gehalten wird indem zwei Rasthaken 18 des Bedienelementes 16 hinter zwei Rastnocken 19 des Schaltergehäuses 17 greifen. Der Mehrfachschalter 15 selbst wird im ausschnittsweise dargestellten Armaturenbrett 20 gehalten, indem zwei Rastflasche 21 sich auf der Rückseite 22 des Armaturenbretts 20 verhaken.

Die haptischen Merkmale des Bedienelementes 16 auf seiner Bedienfläche 4 sind die schematische Aufsicht 23 auf ein Kraftfahrzeug, die Frontscheibe 24, die Heckscheibe 25 und die Heizungssymbole 7. Innen im Schaltergehäuse 17 sind die beiden Schalter 12 mit ihren Drucktasten 14 jeweils im Bereich von Frontscheibe 24 und Heckscheibe 25 angeordnet und über die Anschlußkabel 13 angeschlossen. Das Bedienelement 16 besteht im Bereich von Frontscheibe 24 und Heckscheibe 25 aus einem durchsichtigen Material 26. Innen im Schaltergehäuse 17 ist als Lichtquelle eine Glühlampe 27 angeordnet, die bei Bedarf über ein Anschlußkabel 13 eingeschaltet werden kann, so daß die haptischen Merkmale Frontscheibe 24 und Heckscheibe 25 aufgrund des durchsichtigen Materials 26 vom Bediener visuell besser erkannt werden können. Weiterhin ist zwischen den beiden haptischen Merkmalen Frontscheibe 24 und Heckscheibe 25 ein zentrales haptisches Merkmal 28 in Form einer Vertiefung angeordnet. Betätigt der Bediener das Bedienelement 16 an dieser Stelle, werden beide Schalter 12 gleichzeitig geschaltet.

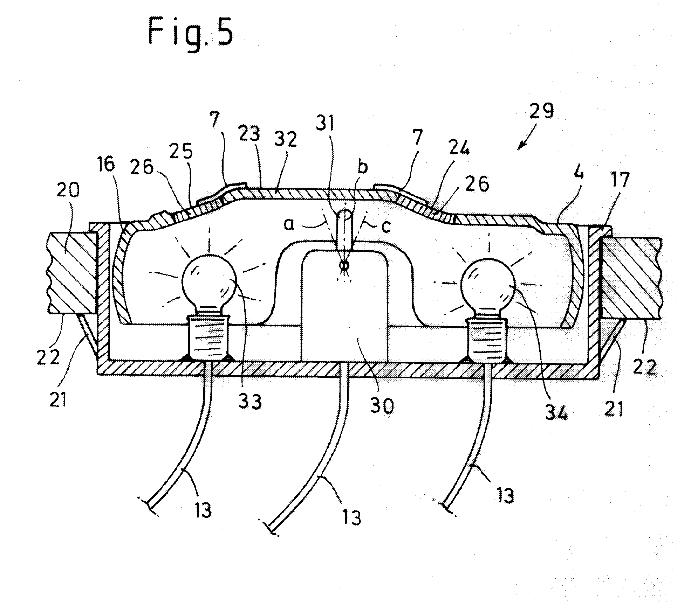

In Fig. 5 zeigt einen Schnitt durch einen Mehrfachschalter 29, der im Aufbau und der Anordnung im Armaturenbrett dem Mehrfachschalter 15 aus Fig. 4 ähnelt. Gleiche Bezugszeichen beziehen sich auf die gleichen Merkmale. Wesentlicher Unterschied besteht in der Anordnung eines zentralen Kippschalters 30, welcher über einen Kipphebel 31, der mit dem Bedienungselement 32 verbunden ist, betätigt wird. Der Kippschalter 30 weist zwei - nicht dargestellte - Schalter auf, wobei der Kipphebel 31 bei der Bewegung in die Position a den ersten Schalter, und bei der Bewegung in die Position c den zweiten Schalter betätigt. Nach erfolgten Schaltungen in den Positionen a oder c kehrt der Kippehebel 31 automatisch in die Mittelstellung b zurück. Die beiden Schalter sind bei dieser Anordnung vorteilhaft als Taster ausgeführt, die bei Betätigung lediglich ein Steuersignal erzeugen, womit dann die dazugehörige Einrichtung geschaltet werden kann, z. B. mittels eines Zeitrelais. Weiterhin sind in dieser Ausführung zwei Leuchtelemente 33 und 34 gezeigt, die elektrisch getrennt sind und nach Bedarf optisch den jeweiligen Betriebszustand der zu dazugehörigen Einrichtung anzeigen können.

## Patentansprüche

1. Mehrfachschalter (1, 15, 29), insbesondere für die Steuerung von Einrichtungen in einem Kraftfahrzeug, mit wenigstens zwei elektrischen Schaltern (12), wobei jedem Schalter (12) ein Bedienfläche zugeordnet ist, die haptische Merkmale aufweist,
**dadurch gekennzeichnet, daß**
für alle Schalter (12) ein gemeinsames Bedienelement (2, 16, 32) vorgesehen ist, wobei das Bedienelement (2, 16, 32) auf seiner Bedienfläche (4) die haptischen Merkmale (5, 6, 7, 8, 23, 24, 25, 28) aufweist.

2. Mehrfachschalter nach Anspruch 1,
**dadurch gekennzeichnet, daß**
die haptischen Merkmale (6, 8, 24, 25) an der Stelle des Bedienelements (2, 16), wo bei einer Schaltbetätigung der einer Einrichtung zugeordnete Schalter (12) betätigt wird, schematisch die Form der zu schaltenden Einrichtung aufweisen.

3. Mehrfachschalter nach Anspruch 1 oder 2,
**dadurch gekennzeichnet, daß**
zumindest ein Teil der haptischen Merkmale (5, 23) ein schematisches Kraftfahrzeug darstellen.

4. Mehrfachschalter nach Anspruch 1, 2 oder 3,
**dadurch gekennzeichnet, daß**
der Mehrfachschalter (1, 15, 29) ein Bedienschalter für die Heizung der Frontscheibe und der Heckscheibe eines Kraftfahrzeuges ist.

5. Mehrfachschalter nach Anspruch 4,
**dadurch gekennzeichnet, daß**
die haptischen Merkmale (6, 8, 24, 25) die beheizbare Frontscheibe und die beheizbare Heckscheibe darstellen.

6. Mehrfachschalter nach einem der Ansprüche 1 bis 5,
**dadurch gekennzeichnet, daß**
mittels des Bedienelementes (2, 16) bei einer Schaltbetätigung nur ein Schalter (12) geschaltet wird.

7. Mehrfachschalter nach Anspruch 6,
**dadurch gekennzeichnet, daß**
der Mehrfachschalter (29) einen Kippschalter (30) aufweist.

8. Mehrfachschalter nach einem der Ansprüche 1 bis 5,
**dadurch gekennzeichnet, daß**
mittels des Bedienelementes (2, 16) wahlweise ein Schalter (12) oder mehrere Schalter (12) gleichzeitig geschaltet werden können.

9. Mehrfachschalter nach Anspruch 8,
**dadurch gekennzeichnet, daß**
das Bedienelement (16) zumindest ein haptisches Merkmal (28) aufweist, bei dessen Betätigung zumindest zwei Schalter (12) gleichzeitig geschaltet werden.

10. Mehrfachschalter nach einem der vorherigen Ansprüche,
**dadurch gekennzeichnet, daß**
das Bedienelement (2, 16) zumindest teilweise, vorzugsweise im Bereich haptischer Merkmale (6, 8, 24, 25), aus einem lichtdurchlässigen Material (26) besteht.
